# EUROPEAN PATENT APPLICATION

(11) **EP 1 465 421 A2**
(43) Date of publication of application: **06.10.2004**
(21) Application number: 04008007.9
(22) Date of filing: 01.04.2004
(51) Int. Cl.: H04N 5/782

(54) **Broadcasting program reservation recording system using PDA and method thereof**

(30) Priority: 04.04.2003 KR 2003021250; 28.02.2004 KR 2004013813
(71) Applicant: LG ELECTRONICS INC., Seoul (KR)
(72) Inventor: Yim, Kyeong Su, Suwon Gyeonggi-Do (KR)
(74) Representative: VOSSIUS & PARTNER

(57) **Abstract**

Disclosed is a broadcasting program reservation-recording system using a PDA comprising: a CDMA module (60) provided with a mobile communication module for receiving broadcasting program information; a remote communication controller (30) for exchanging data with an external device or performing a wireless communication in order to control the external device; a storage unit (50) for storing broadcasting program information received through the CDMA module (60) and control data for each kind of external device received by the remote communication controller (30); a controller (20) for converting the broadcasting program information stored in the storage unit (50) into data information of a suitable form to be displayed and thereby outputting; and a display unit (10) for displaying data information regarding the broadcasting program information outputted from the controller (20) on a screen. According to the system, broadcasting program information such as EPG information can be reservation-recorded by simply certifying on the screen (15) of the PDA even under a state that powers of a broadcasting receiver and a TV are turned off, thereby reducing a power consumption for performing a reservation-recording. Also, broadcasting programs can be reservation-recorded conveniently at a distant place.

## Description

The present invention relates to a broadcasting program reservation-recording system, and more particularly, to a broadcasting program reservation-recording system using a PDA capable of more simply reservation-recording a broadcasting program by a search using a PDA and a method thereof.

In the past, a G-code is directly inputted to a VCR through a newspaper or a TV program guide booklet in order to perform a reservation recording of a broadcasting program. However, as a digital broadcasting and a multi-channel are shown, it is hard to find a broadcasting program.

According to this, a broadcasting data called an electronic program guide (EPG) is downloaded from a broadcasting station with a broadcasting signal thus to display the EPG information on a TV screen through a broadcasting receiver such as a set top box, so that a user can search or reservation-record a broadcasting program more conveniently.

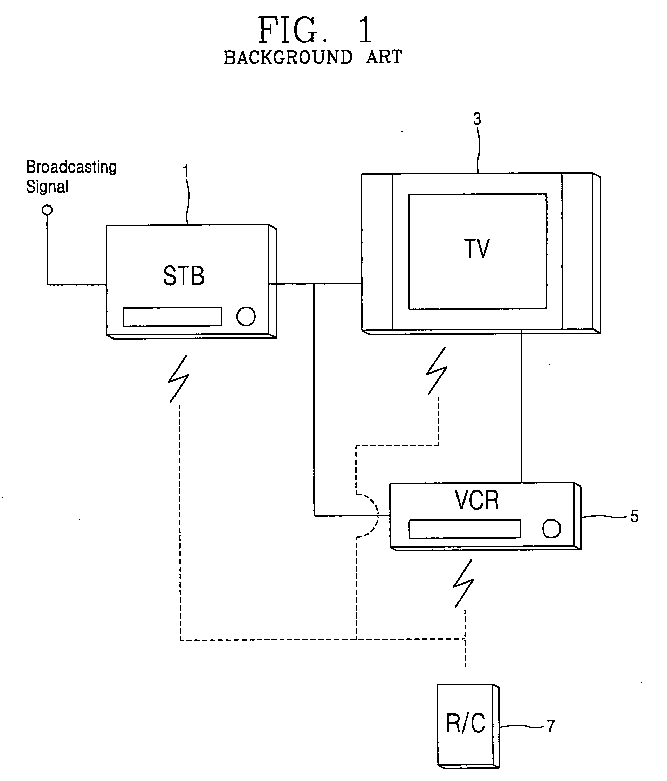

Figure 1 is a block diagram showing a reservation-recording system of a broadcasting program in accordance with the conventional art.

As shown, the conventional reservation-recording system for a broadcasting program comprises: a broadcasting receiver 1 for receiving a digital broadcasting; a TV 3 for displaying the received digital broadcasting on a screen; a VCR 5 for storing or reservation-recording the broadcasting program displayed on the TV screen; and a remote controller 7 for controlling said each device.

Operation of the conventional reservation-recording system for a broadcasting program will be explained as follows.

First, broadcasting program information is downloaded under a state that powers of the TV 3 and the broadcasting receiver 1 are turned on thus to temporarily store in an on screen display (OSD) memory of the TV. Then, the stored broadcasting program information is displayed on a screen of the TV 3, so that the user can directly search or select the broadcasting program information. At the time of reservation-recording for a specific broadcasting program, the user presses a reservation-recording button of the remote controller thus to transmit a command signal for a reservation-recording to a reception module of the remote controller of a recording apparatus VCR 5 by a control signal of the remote controller 7, thereby storing reservation-recording information at an inner memory of the VCR 5.

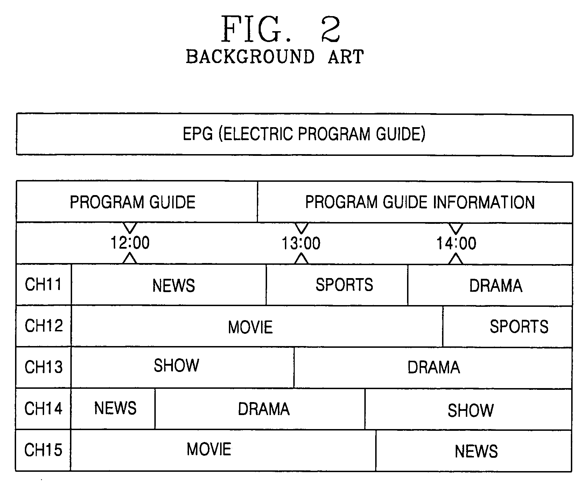

Figure 2 is an exemplary view of an electric program guide (EPG) that is broadcasting program information provided through a digital broadcasting.

As shown, as the EPG information displayed on the TV screen, broadcasting channel information, broadcasting time information, broadcasting program title information according to each channel and time are displayed as a list form. According to this, the user certifies EPG information through the TV screen, selects his desired program information according to broadcasting starting time, finishing time, and program summary information thus to watch a corresponding broadcasting program received through the broadcasting channel, or reservation-records a broadcasting program through the VCR 300 with reference to the broadcasting program information.

In order to search the broadcasting program information, the user searches channels with reference to the EPG information provided from the digital broadcasting receiver on the TV screen by using an integrated remote controller for simultaneously controlling each device (herein, the digital broadcasting receiver, the TV, and the VCR) or individual remote controllers for controlling each individual device.

However, in order to search the EPG information or reservation-record a broadcasting program, the user has to handle the remote controller 7 under a state that powers of the digital broadcasting receiver 1 and the TV are always turned on. That is, under a state that either a power of the broadcasting receiver 1 or a power of the TV 3 is turned off, a search for the EPG information or a reservation-recording for a broadcasting program can not be performed. Also, since powers of the broadcasting receiver 1 and the VCR 5 have to be always in a turned-on state at the time of a reservation-recording a broadcasting program, an unnecessary power is consumed. Also, whenever a reservation-recording is performed, a broadcasting program has to be again downloaded through the broadcasting receiver 1.

Additionally, in order to search broadcasting program information, the user has to turn on the power of the broadcasting receiver 1, download program data, and directly certify the downloaded program data on the TV screen. According to this, a reservation-recording of a broadcasting program through the VCR 5 at home is impossible in a distant place where the broadcasting receiver 1 and the TV 3 are not provided.

Therefore, an object of the present invention is to provide a broadcasting program reservation-recording system using a PDA and a method thereof capable of searching broadcasting program information by a download using a PDA and capable of reservation-recording a broadcasting program.

Another object of the present invention is to provide a broadcasting program reservation-recording system using a PDA and a method thereof capable of reservation-recording a broadcasting program by a wireless communication means after searching broadcasting program information at a distant place using a PDA provided with a mobile communication module.

To achieve these and other advantages and in accordance with the purpose of the present invention, as embodied and broadly described herein, there is provided a broadcasting program reservation-recording system using a PDA comprises: a CDMA module provided with a mobile communication module for receiving broadcasting program information; a remote communication controller for exchanging data with an external device or performing a wireless communication in order to control the external device; a storage unit for storing broadcasting program information received through the CDMA module and control data for each kind of external device received by the remote communication controller; a controller for converting the broadcasting program information stored in the storage unit into data information of a suitable form to be displayed and thereby outputting; and a display unit for displaying data information regarding the broadcasting program information outputted from the controller on a screen.

In order to achieve another object of the present invention, the broadcasting program reservation-recording system using a PDA comprises: a service center for providing broadcasting program information; a PDA for searching a broadcasting program by downloading broadcasting program information from the service center and thereby outputting reservation-recording information of the broadcasting program; and a recording apparatus for reservation-recording the broadcasting program provided from the service center based on the outputted reservation-recording information of the PDA.

To achieve these and other advantages and in accordance with the purpose of the present invention, as embodied and broadly described herein, there is also provided a broadcasting program reservation-recording method using a PDA comprises the steps of: downloading broadcasting program information and storing it in a PDA; converting the stored broadcasting program information into data information to be displayed on a screen of the PDA and then outputting; searching the broadcasting program information displayed on the screen; and performing a reservation-recording by selecting a reservation-recording key of the PDA based on the searched broadcasting program information.

In order to achieve another object of the present invention, the broadcasting program reservation-recording method using a PDA comprises the steps of: searching broadcasting program information using a PDA; a user's selecting his desired broadcasting program among the searched broadcasting programs, and transmitting corresponding reservation-recording information as a transmission packet form; transmitting the packetted reservation-recording information to a subscriber's server through a wireless internet network; transmitting the reservation-recording information to the subscriber's IP address based on the transmission packet of the reservation-recording information which has been transmitted to the subscriber's server; and performing a reservation-recording in a recording apparatus by receiving the reservation-recording information.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram showing a general reservation-recording system for a broadcasting program;
Figure 2 is an exemplary view of an electric program guide (EPG) that is broadcasting program information provided through a digital broadcasting;
Figure 3 is a construction view of a PDA for searching and reservation-recording a broadcasting program according to the present invention;
Figure 4A is an exemplary view showing a connection state among a digital broadcasting receiver, a television, and a VCR operated by the PDA of Figure 3;
Figure 4B is an exemplary view showing a connection state between a PVR and a TV operated by the PDA of Figure 3;
Figures 5A to 5C are exemplary views of a display screen of the PDA for performing a reservation-recording according to the present invention;
Figure 6 is a flow chart showing a reservation-recording method for a broadcasting program according to the present invention;
Figure 7 is an exemplary view of a reservation-recording process for a broadcasting program at a distant place through the internet according to another embodiment of the present invention;
Figure 8 is a block diagram showing a structure of a wakeup LAN provided at a recording apparatus of the present invention;
Figure 9 is a flow chart showing a reservation-recording method according to another embodiment of the present invention;
Figure 10A is an exemplary view showing a packet data structure for performing a reservation-recording through a wireless internet network according to the present invention; and
Figure 10B is an exemplary view showing a packet data structure for performing a reservation-recording through a telephone wire according to the present invention.

Reference will now be made in detail to the preferred embodiments of the present invention, examples of which are illustrated in the accompanying drawings.

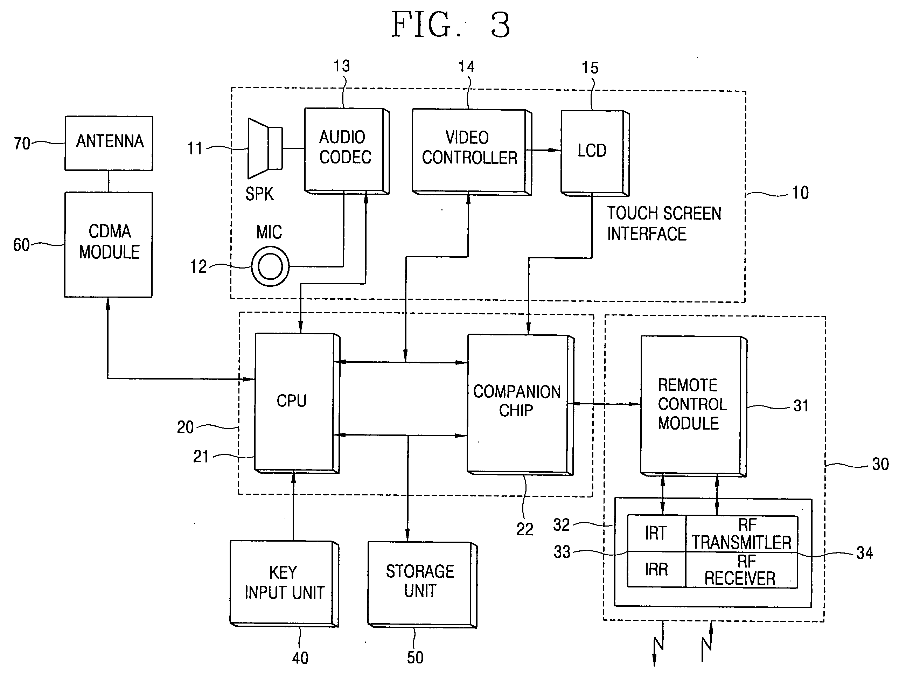

Figure 3 is a construction view of a PDA for searching and reservation-recording a broadcasting program according to the present invention.

As shown, a personal digital assistant (PDA) comprises: an antenna 70 for transmitting and receiving a broadcasting signal; a CDMA module 60 provided with a mobile communication module thus to be accessed to a mobile communication network or the internet, for transmitting or receiving data; a remote communication controller 30 for exchanging data with each kind of external device (for example, a set top box, a TV, a VCR, and a PVR) or performing a wireless communication in order to control the external device; a storage unit 50 for storing broadcasting program information received through the CDMA module 60 and control information for said each kind of external device received by the remote communication controller 30; a controller 20 for converting the broadcasting program information stored in the storage unit 50 into data information of a suitable form to be displayed and thereby outputting; a display unit 10 for displaying data information regarding the broadcasting program information outputted from the controller 20 on a screen of the PDA; and a key input unit 40 for selecting data information displayed on the screen.

The controller 20 is composed of: a CPU 21 for generating icons for searching and controlling the broadcasting program information based on the data stored in the storage unit 50 and outputting the icons on the screen of the PDA; and a companion chip 22 for controlling an operation of the remote communication controller 30 through an interface with the CPU 21.

The remote communication controller 30 is composed of a remote control module 31 for outputting a remote control signal in response to a remote control command for the external device from the companion chip 22 connected to the CPU 21; and a transmitter/receiver 32 for performing a wireless data communication link with the external devices by receiving the remote control signal from the remote control module 31.

For example, the transmitter/receiver 32 is composed of: an infrared transmitter/infrared receiver (IR transmitter/receiver) 33 for providing an infrared wireless data communication link; and a radio frequency data communication link (RF transmitter/receiver) 34 for providing a high frequency wireless data communication link.

The display unit 10 for controlling video/audio data regarding the broadcasting program information and thereby outputting as screen information and audio information on the screen includes: an audio codec 13; a video controller 14, a liquid crystal display (LCD) screen 15, a speaker 11, and a microphone 12.

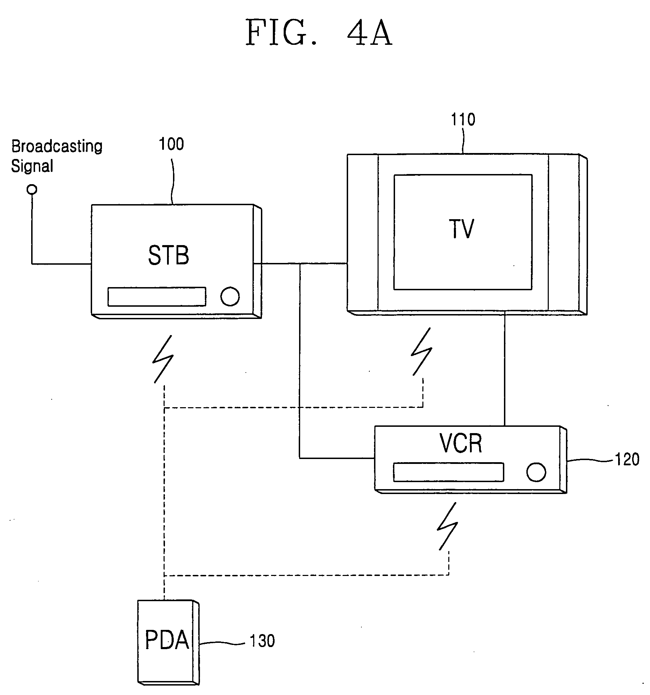

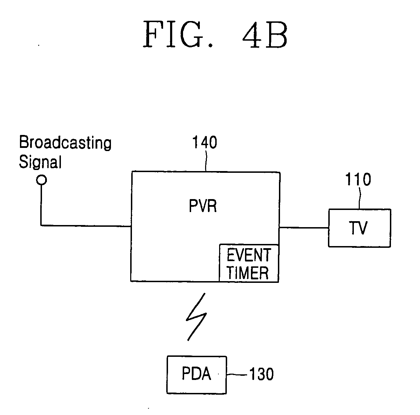

Figure 4A is an exemplary view showing a connection state among a digital broadcasting receiver, a television, and a VCR operated by the PDA of Figure 3, and Figure 4B is an exemplary view showing a connection state between a PVR and a TV operated by the PDA of Figure 3.

As shown in Figure 4A, the PDA 130 according to the present invention downloads broadcasting program information from a broadcasting receiver 100 such as a set-top box (STB) thus to store in a memory, and searches the broadcasting program information or performs a reservation-recording. As shown in Figure 4B, a broadcasting receiver 140 such as a personal video recorder (PVR) can be used instead of the STB. Therefore, the PDA 130 downloads broadcasting program information through the PVR thus to store in the memory, and searches the broadcasting program information or performs a reservation-recording. Also, the PDA 130 according to the present invention can be constructed to receive a broadcasting program by directly accessing to a wireless internet network through the mobile communication module and thereby accessing to a broadcasting program data service provider's internet homepage.

The broadcasting program information is downloaded periodically with a predetermined amount (for example, an amount corresponding to one week or one month) thus to be stored. That is, the broadcasting program information is pre-stored in the PDA 130, and then the stored broadcasting program information is searched through a screen provided at the PDA 130 thus to perform a reservation-recording. Therefore, at the time of searching the broadcasting program information, powers of the broadcasting receiver and the display unit need not to be always turned on, thereby preventing an unnecessary power consumption.

A method for searching and reservation-recording broadcasting program information by using the PDA according to the present invention will be explained as follows.

First, the controller 20 downloads broadcasting program information from outside through the CDMA module 60 in advance thus to store in the storage unit 50.

Then, the controller 20 outputs the broadcasting program information stored in the storage unit 50 on the screen of the PDA in response to the user's output command for the broadcasting program information. Herein, the broadcasting program information is converted into data information of a suitable form to be displayed and then is outputted to the display unit 10. According to this, the display unit 10 receives data information regarding the broadcasting program information outputted from the controller 20 thus to display on the screen 15 as an icon form.

Then, a channel search for the broadcasting program information displayed on the screen of the PDA is performed by the user's key input. Herein, if an electric program guide (EPG) is provided as the broadcasting program information, brief or full channel information is shown in accordance with that a channel inside the EPG is highlighted. Under this state, the user sets a channel through an up/down key input.

A software channel management for the broadcasting program information is provided at the PDA thus to compare a broadcasting program reserved by the user and channel information of the EPG, thereby searching channels regarding a broadcasting program among substantially active channels.

Then, in order to perform a reservation-recording by the user's key input, the remote communication controller 30 performs a communication with each kind of external device to be controlled in response to an output control signal of the controller 20.

For example, in response to the user's key input for a reservation-recording, the CPU 21 performs an interface with the companion chip 22 and controls the remote control module 31. Therefore, the remote control module 31 outputs an infrared signal corresponding to broadcasting program information to the recording apparatuses 120 and 140 through the IR transmitter/receiver 33. Then, the recording apparatuses 120 and 140 receive the infrared signal thus to store as reservation-recording information, and replay and reservation-records a broadcasting program on the basis of the stored reservation-recording information.

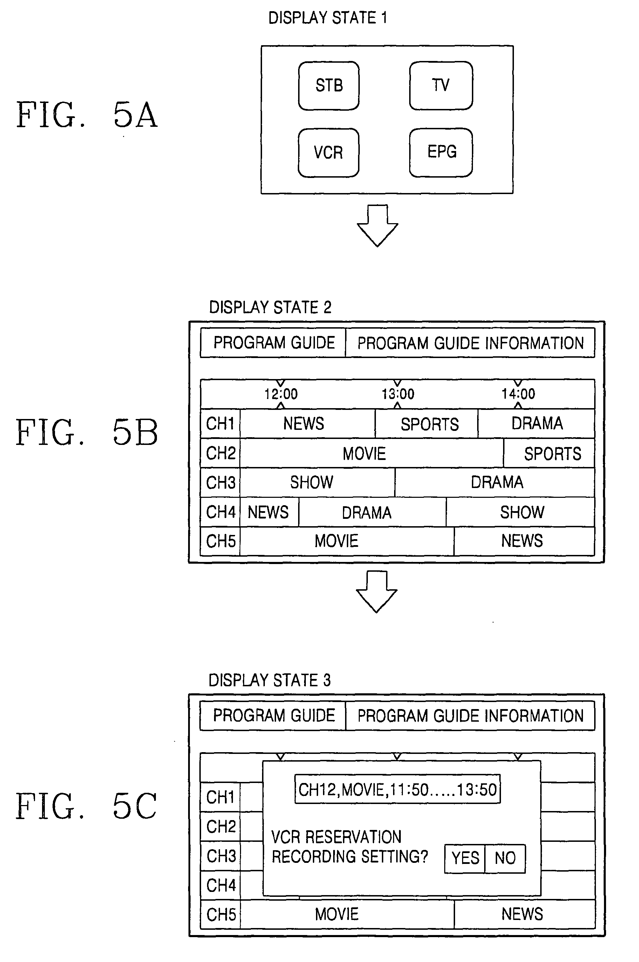

Figures 5A to 5C are exemplary views of a display screen of the PDA for performing a reservation-recording according to the present invention.

As shown, the PDA according to the present invention generates a specific icon for the user to easily search downloaded broadcasting program, thereby displaying broadcasting channel information, broadcasting time information, and broadcasting program titles according to each channel and time as a list form.

For example, at the time of selecting the EPG icon shown in Figure 5A, downloaded EPG information is read and then each channel information is displayed on the LCD screen 15 of the PDA.

Then, as shown in Figures 5B and 5C, when the user selects an arbitrary broadcasting program, broadcasting channel information and broadcasting time information corresponding to the broadcasting program title are displayed with an enlargement, and a guide message inquiring whether the information is to be set in the recording apparatus as reservation-recording information is outputted.

Accordingly, the user can easily certify the EPG information on the screen of the PDA, and reservation-record his desired broadcasting program.

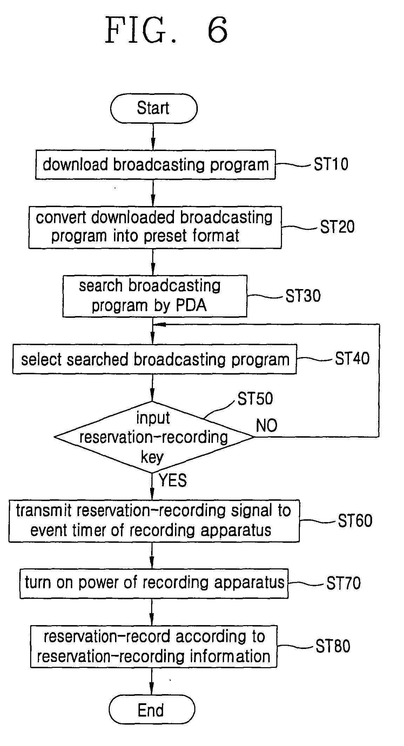

Figure 6 is a flow chart showing a reservation-recording method for a broadcasting program according to the present invention.

The reservation-recording method for a broadcasting program using the PDA 130 will be explained with reference to Figure 6. First, a broadcasting program is downloaded from a broadcasting program providing means thus to store in the PDA (ST10). The broadcasting program providing means indicates a broadcasting receiver such as a broadcasting program data service provider's internet homepage, a set top box, or a PVR. EPG including broadcasting program information is downloaded from said broadcasting program providing means thus to be stored in the PDA. Herein, an amount of the EPG stored in the PDA can be arbitrarily set by the user, but a broadcasting program of an amount corresponding to one week is preferably stored.

Then, the broadcasting program stored in the PDA 130 is converted into a preset data format (ST20), and the EPG button of the PDA 130 is selected thus to search broadcasting programs (ST30). The searched broadcasting programs are displayed on the screen of the PDA 130, so that the user can select his desired broadcasting program (ST40).

Next, the user inputs a reservation-recording key for the selected broadcasting program (ST50), and the PDA 130 transmits reservation-recording information to an event timer included in the recording apparatuses 120 and 140 (ST60). The event timer stores the reservation-recording information and thereby is operated on preset program reservation time, thereby turning on the power of the recording apparatus and reservation-recording a broadcasting program (ST70, ST80). The event timer is provided with a non-volatile memory thus to store the reservation-recording information, turn on the power of the recording apparatus on the preset time of the broadcasting program, and reservation-record the broadcasting program.

Since the event timer receives a power through a back-up battery, a power of the entire system need not to be turned on at the time of reservation-recording, thereby reducing an unnecessary consumption power.

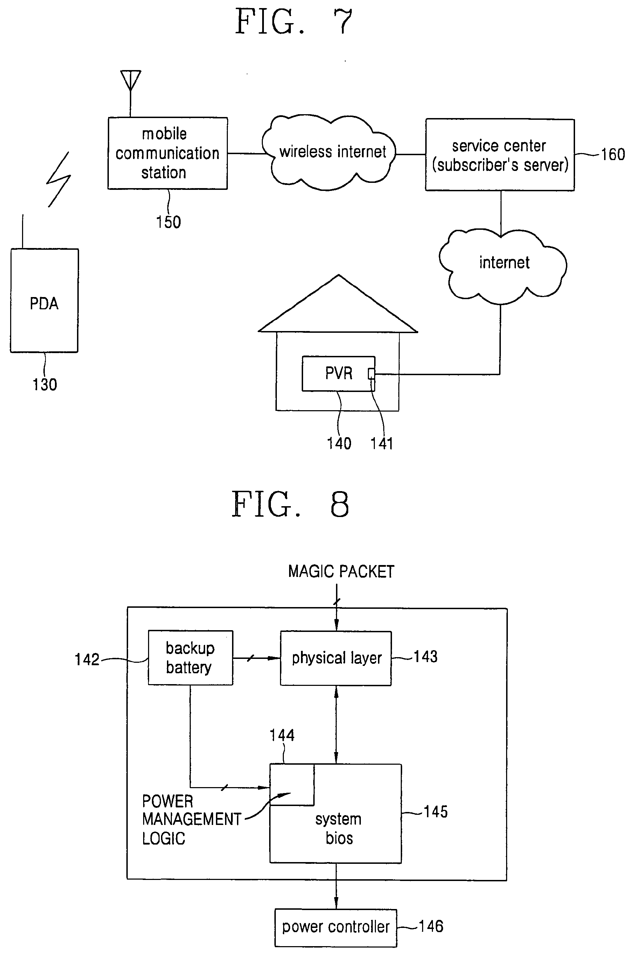

Figure 7 is an exemplary view of a reservation-recording process for a broadcasting program at a distant place through the internet according to another embodiment of the present invention.

As shown, a reservation-recording system using a PDA can reservation-record a broadcasting program at a distant place through the internet. The reservation-recording system using a PDA comprises: a service center 160 for providing broadcasting program information; a PDA 130 for searching a broadcasting program by downloading broadcasting program information from the service center 160 and thereby outputting reservation-recording information of the broadcasting program; a mobile communication station 150 for providing a wireless communication means between the service center and the PDA; and a home recording apparatus 140 for reservation-recording the broadcasting program based on the reservation-recording information of the PDA provided from the service center 160. A subscriber's server located at the service center 160 for providing broadcasting program information includes the subscriber's PDA information and internet access information of the home recording apparatus. The internet access information includes IP address information when the recording apparatus is connected to the internet by an Ethernet, and includes telephone number information when the recording apparatus is connected to the internet by a telephone wire. The home recording apparatus is provided with a wakeup LAN 141 thus to turn on the recording apparatus 140 at the time of a data communication request from outside.

Figure 8 is a block diagram showing a structure of the wakeup LAN provided at the recording apparatus of the present invention.

As shown, the recording apparatus 140 according to the present invention comprises: a physical layer unit 143 for performing an interface with each unit of the recording apparatus 140 by receiving a control signal for reservation-recording from outside; a system bios unit 145 for controlling a power; a backup battery 142 for providing a power to the physical layer unit and the system bios unit; and a power control unit 146 for turning on/off a power of the recording apparatus according to a power control of the system bios unit. The system bios unit 145 includes a power management logic unit 144 that stands by with an operation-enable state by receiving a minimum power from the backup battery 142. Therefore, in case that a magic packet for turning on the power of the system by receiving an external command is inputted to the recording apparatus, the system bios unit 145 is operated through the power management logic unit 144 provided at the system bios unit 145 thus to control a power of the power control unit 146. A representative example provided with the wakeup LAN 141 is the PVR 140.

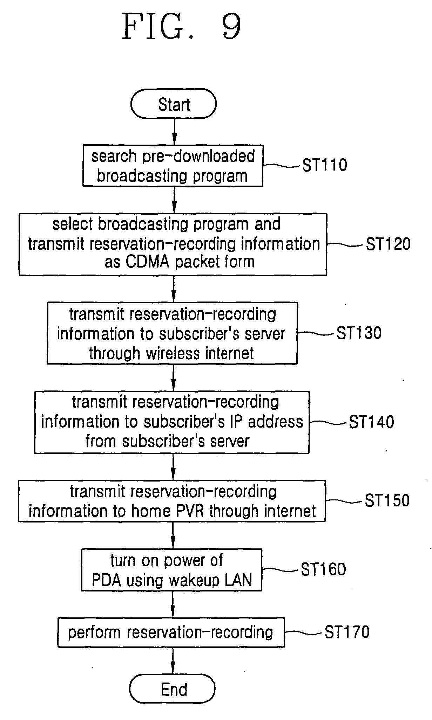

Figure 9 is a flow chart showing a reservation-recording method according to another embodiment of the present invention.

As shown, downloaded broadcasting program data is searched by the PDA (ST110). Herein, since the broadcasting program data is downloaded by using a wireless internet network, broadcasting programs can be searched even at a distant place. Then, the user selects his desired broadcasting program among the searched broadcasting programs, and transmits reservation-recording information as a transmission packet (ex, CDMA packet) (ST120). The packetted reservation-recording information is transmitted to a subscriber's server through a wireless internet network (ST130).

Then, the subscriber's server transmits reservation-recording information to the subscriber's IP address on the basis of the transmission packet of the transmitted reservation-recording information (ST150).

Next, the home recording apparatus receives the reservation-recording information thus to perform a reservation-recording. The recording apparatus is constructed to turn on a power thereof through a wakeup LAN (ST160), to store reservation-recording information by an event timer including a non-volatile memory, and to perform a reservation-recording by turning on the power thereof on reservation time of a broadcasting program (ST170).

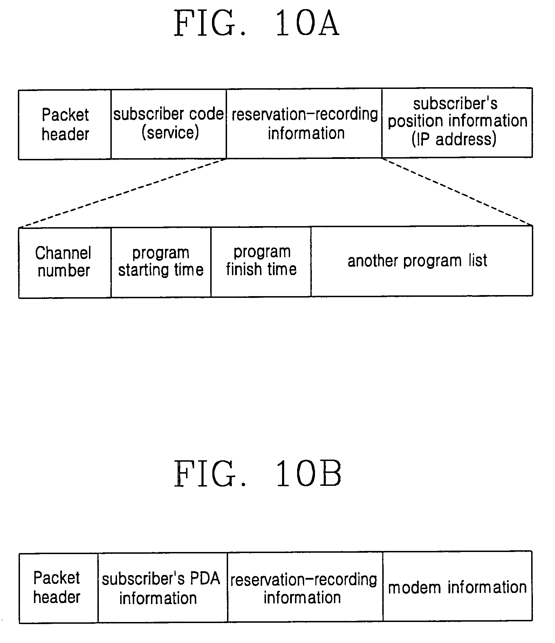

Figure 10A is an exemplary view showing a packet data structure for performing a reservation-recording through a wireless internet network according to the present invention.

As shown, the packet data including a packet header for informing a data content, a subscriber code for informing subscriber's information, reservation-recording information, subscriber's IP address is stored in the home PVR. The reservation-recording information includes channel information for performing a reservation-recording, time information regarding reservation start time and reservation finish time, category information including a program list, and etc.

Figure 10B is an exemplary view showing a packet data structure for performing a reservation-recording through a telephone wire according to the present invention.

As shown, the packet data includes a packet header for informing a data content, a subscriber's PDA information, reservation-recording information, mode information, and etc., and is stored in the home PVR. As aforementioned in Figure 10A, the reservation-recording information includes channel information, time information, category information, and etc.

As aforementioned, in the broadcasting program reservation-recording system using the PDA, broadcasting program information such as EPG information can be reservation-recorded by simply certifying on the screen of the PDA even under a state that the powers of the broadcasting receiver and the TV are turned off, thereby reducing a power consumption for performing a reservation-recording.

Also, broadcasting programs can be searched at a distant place through the PDA provided with the mobile communication module, and then reservation-recorded in the home recording apparatus conveniently through the internet.

Also, since broadcasting program information of a predetermined amount is pre-stored in the memory, the user can search his desired broadcasting program information on the screen of the PDA and then turn on the power of the home recording apparatus on reservation time of the broadcasting program through the PDA, thereby performing a convenient reservation-recording.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for reservation-recording a broadcasting program comprising the steps of:
downloading broadcasting program information and storing the information in a PDA;
converting the stored broadcasting program information into data information to be displayed on a screen of the PDA and then outputting;
searching the broadcasting program information displayed on the screen; and
performing a reservation-recording by selecting a reservation-recording key of the PDA based on the searched broadcasting program information.

2. The method of claim 1, wherein the step for performing a reservation-recording includes the steps of:
transmitting reservation-recording information to an event timer of a recording apparatus in response to the input of the reservation-recording key; and
storing the transmitted reservation-recording information to the event timer of the recording apparatus, operating the event timer on preset reservation time based on the reservation-recording information thereby turning on a power of the recording apparatus, and performing a reservation-recording.

3. The method of claim 1, wherein in the step for performing a reservation-recording, the broadcasting program information selected by a user among the displayed broadcasting program information is wirelessly transmitted to the recording apparatus.

4. The method of claim 1, wherein in the step for downloading broadcasting program information and storing, broadcasting program information is downloaded through a broadcasting program data service provider's internet homepage.

5. The method of claim 1, wherein in the step for downloading broadcasting program information and storing, broadcasting program information is directly downloaded from a broadcasting receiver where broadcasting program information is stored.

6. The method of claim 1, wherein in the step for outputting the broadcasting program information on the screen, icons are generated on the basis of the stored broadcasting program information thus to be displayed on the screen.

7. The method of claim 6, wherein if the displayed icon is selected, broadcasting channel information, broadcasting time information, and broadcasting program information according to each channel and time are displayed as a list form.

8. The method of claim 7, wherein in the step for performing a reservation-recording, when the user selects an arbitrary broadcasting program, broadcasting channel information and broadcasting time information corresponding to the broadcasting program title are displayed with an enlargement, and a guide message inquiring whether the information is to be set as reservation-recording information is displayed.

9. The method of claim 1, wherein in the step for searching the broadcasting program, if an electric program guide (EPG) is provided as the broadcasting program information, a channel is set by inputting an up/down key of the PDA when the channel inside the EPG is highlighted.

10. The method of claim 9, wherein in the step for searching the broadcasting program, a software channel management for the broadcasting program information is provided at the PDA thus to compare a channel set by a user with channel information of the program guide and to perform a channel search among substantial active channels.

11. The method of claim 1, wherein the PDA downloads broadcasting program information through a broadcasting receiver for receiving broadcasting program information thus to store in a memory and perform a search and a reservation-recording of the broadcasting program.

12. The method of claim 1, wherein the PDA accesses to a wireless internet network through a mobile communication module thus to download a broadcasting program from a broadcasting program service provider's internet homepage and store the program in a memory, and then performs a search and a reservation-recording of the program.

13. A broadcasting program reservation-recording method using a PDA comprising the steps of:
searching broadcasting program information using a PDA;
a user's selecting his desired broadcasting program among the searched broadcasting programs, and transmitting reservation-recording information corresponding to the broadcasting program as a transmission packet (ex, CDMA packet) form;
transmitting the packetted reservation-recording information to a subscriber's server through a wireless internet network;
transmitting the reservation-recording information to the subscriber's IP address based on the transmission packet of the reservation-recording information which has been transmitted to the subscriber's server; and
performing a reservation-recording in a recording apparatus by receiving the reservation-recording information.

14. The method of claim 13, wherein the step for performing a reservation-recording includes a step for turning on a power of the recording apparatus through a wakeup LAN.

15. The method of claim 13, wherein in the step for performing a reservation-recording, the reservation-recording information is stored by an event timer including a non-volatile memory, a power of the recording apparatus is turned on at a preset reservation time of the broadcasting program on the basis of the reservation-recording information, and a reservation-record is performed.

16. The method of claim 13, wherein the transmission packet includes a packet header for informing a data content, a subscriber's code for informing subscriber's information, reservation-recording information, and a subscriber's IP information.

17. The method of claim 16, wherein the reservation-recording information includes channel information for performing a reservation-recording, time information regarding reservation start time and reservation finish time, and category information including a program list.

18. The method of claim 13, wherein the transmission packet includes a packet header for informing a data content, a subscriber's PDA information, reservation-recording information, modem information when the recording apparatus is connected to the internet by a telephone wire.

19. A broadcasting program reservation-recording system using a PDA comprising:
a CDMA module provided with a mobile communication module for receiving broadcasting program information;
a remote communication controller for exchanging data with an external device or performing a wireless communication in order to control the external device;
a storage unit for storing broadcasting program information received through the CDMA module and control data for each kind of external device received by the remote communication controller;
a controller for converting the broadcasting program information stored in the storage unit into data information of a suitable form to be displayed and thereby outputting; and
a display unit for displaying data information regarding the broadcasting program information outputted from the controller on a screen.

20. The system of claim 19 further comprising a key input unit for selecting the data information displayed on the screen.

21. The system of claim 19, wherein the controller includes:
a CPU for generating icons for searching or controlling the broadcasting program information based on the data stored in the storage unit and thereby outputting on the screen of the PDA; and
a companion chip for controlling an operation of the remote communication controller through an interface with the CPU.

22. The system of claim 19, wherein the controller sets an arbitrary broadcasting program selected by a user among the broadcasting program information displayed on the display unit in a recording apparatus as reservation-recording information.

23. The system of claim 21, wherein the remote communication controller includes:
a remote control module for outputting a remote control signal in response to a remote control command for the external device provided from the companion chip connected to the CPU; and
a transmitter/receiver for performing a wireless data communication link with the external devices by receiving the remote control signal from the remote control module.

24. The system of claim 23, wherein the transmitter/receiver includes:
an infrared transmitter and an infrared receiver (IR transmitter/receiver) for providing an infrared wireless data communication link; and
a radio frequency data communication link (RF transmitter/receiver) for providing a high frequency wireless data communication link.

25. The system of claim 19, wherein the display unit for controlling video/audio data regarding the broadcasting program information and thereby outputting as screen information and audio information on the screen includes: a video controller; an audio codec; a liquid crystal display (LCD) screen; a speaker; and a microphone.

26. A broadcasting program reservation-recording system using a PDA comprising:
a service center for providing broadcasting program information;
a PDA for searching a broadcasting program by downloading broadcasting program information from the service center and thereby outputting reservation-recording information of the broadcasting program;
and a recording apparatus for reservation-recording the broadcasting program provided from the service center based on the outputted reservation-recording information of the PDA.

27. The system of claim 26 further comprising a mobile communication station for providing a wireless communication means between the service center and the PDA.

28. The system of claim 26, wherein the service center includes information of the PDA and internet access information of the recording apparatus.

29. The system of claim 28, wherein the internet access information includes IP address information of the recording apparatus when the recording apparatus is connected to the internet by an Ethernet, and includes telephone number information when the recording apparatus is connected to the internet by a telephone wire.

30. The system of claim 29, wherein the recording apparatus is provided with a wakeup LAN module thus to turn on the recording apparatus at the time of a data communication request from outside.

31. The system of claim 30, wherein the wakeup LAN module includes:
a system bios unit including control information for controlling a power of the recording apparatus;
a physical layer unit for performing an interface with the system bios unit in response to the data communication request from outside; and
a backup battery for providing a power to the physical layer unit and the system bios unit.

32. The system of claim 31 further comprising a power control unit for turning on/off a power of the recording apparatus based on the power control information of the system bios unit.

33. The system of claim 31, wherein the system bios unit includes a power management logic unit that stands by with an operation-enable state by receiving a minimum power from the backup battery.
